(19) Europäisches Patentamt
European Patent Office
Office européen des brevets

(11) Publication number: **0 184 592**
**A1**

(12) # EUROPEAN PATENT APPLICATION

(21) Application number: **84115326.5**

(22) Date of filing: **13.12.84**

(51) Int. Cl.⁴: **C 08 G 73/14**, C 08 G 18/64, H 01 B 3/30

(43) Date of publication of application: **18.06.86 Bulletin 86/25**

(84) Designated Contracting States: **DE FR GB IT NL**

(71) Applicant: **GENERAL ELECTRIC COMPANY, 1 River Road, Schenectady New York 12305 (US)**

(72) Inventor: **Bolon, Donald Allen, 12 Cedar Lane, Scotia, New York 12302 (US)**

(74) Representative: **Catherine, Alain, General Electric - Deutschland Munich Patent Operations Frauenstrasse 32, D-8000 München 5 (DE)**

(54) **Novel acid-extended copolyamideimides and method for their preparation.**

(57) Polyamideimides are prepared by first reacting a diamine, preferably an aromatic diamine, with a carboxy anhydride such as trimellitic anhydride and a dianhydride such as bisphenol A dianhydride; and then reacting mixtures of the resulting prepolymers and dicarboxylic acids, or functional derivatives thereof, with a diisocyanate or diamine, preferably an aromatic diisocyanate.

EP 0 184 592 A1

NOVEL ACID-EXTENDED COPOLYAMIDEIMIDES AND METHOD FOR THEIR PREPARATION

This invention relates to new polymeric compositions of matter and methods for their preparation.

Various polyamides and polyimides prepared by the reaction of polycarboxylic acids and their functional derivatives with polyamides and/or polyisocyanates are known in the art. For example, British published application 2,080,316 discloses the reaction of a mixture of one or more dianhydrides and a tribasic acid anhydride with a diamine, diisocyanate or mixture thereof to produce polymers containing both amide and imide linkages. Other reactions of diamines with polycarboxylic acid anhydrides are disclosed in U.S. Patent 3,975,345. The reaction of diisocyanates with various combinations of dicarboxylic, tricarboxylic and tetracarboxylic acids and their anhydrides are disclosed in the following U.S. patents:

3,843,587
3,929,691
4,061,622

According to U.S. Patent 4,331,799, polymers containing both amide and imide moieties can be prepared by reacting diamines with a mixture of a dianhydride and the acyl chloride of a carboxy anhydride, such as trimellitic anhydride.

This reaction and the others disclosed as described above produce polymers of random and relatively uncontrollable structure and properties. Among the results may be high susceptibility to heat distortion and low glass transition temperature. Moreover, the use of an acyl chloride as a precursor may result in the presence of residual chloride in the polymer, an unacceptable situation for certain utilities (for example as electrical insulators).

Copending application Serial No. [RD-13,932], filed of even date herewith, disclosure of which is incorporated by reference herein, discloses and claims novel copolyamideimides free from many of these deficiencies, prepolymer intermediates

therefor, and methods for their preparation. It remains of interest, however, to prepare copolyamideimides having such properties from relatively inexpensive starting materials.

A principal object of the present invention, therefore, is to provide novel copolyamideimides.

A further object is to provide copolyamideimides with relatively high glass transition temperatures and resistance to heat distortion.

A further object is to provide relatively simple methods for the preparation of copolyamideimides as described above.

Other objects will in part be obvious and will in part appear hereinafter.

In its broadest sense, the present invention is directed to acid-extended copolyamideimides prepared by a method which comprises the steps of:

(1) reacting, under conditions whereby all water of reaction is removed:

(A) at least one diamine having the formula

(I) $H_2N-R^1-NH_2$ ,

wherein $R^1$ is a divalent hydrocarbon-based radical, with

(B) at least one carboxy anhydride of the formula

(II) 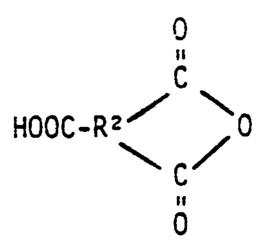 ,

wherein $R^2$ is a trivalent hydrocarbon-based radical, and

(C) at least one dianhydride of the formula

(III) 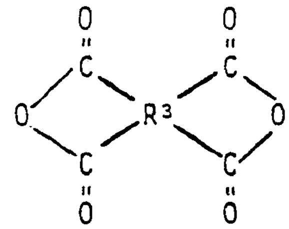 ,

wherein $R^3$ is a tetravalent hydrocarbon-based radical;

the molar ratio of reagent C to reagent B being at least about 0.25:1 and the ratio of equivalents of reagent A to anhydride equivalents of reagents B and C combined being about 1:1; and subsequently

(2) reacting a mixture of

(D) the product of step 1, or a functional derivative thereof, and

(F) at least one dicarboxylic acid having the formula

(IV) $HOOC-R^7-COOH$,

or a functional derivative thereof, wherein $R^7$ is a divalent hydrocarbon-based radical containing about 3-12 carbon atoms, with

(E) at least one of diisocyanates having the formula

( V) $OCN-R^4-NCO$

and diamines having the formula

(VI) $R^5NH-R^4-NHR^6$,

wherein $R^4$ is a divalent hydrocarbon-based or polymeric radical and each of $R^5$ and $R^6$ is independently hydrogen or a lower hydrocarbon-based radical.

As used herein, the term "hydrocarbon-based radical" denotes a radical free from acetylenic and usually also from ethylenic unsaturation, having a carbon atom directly attached to the remainder of the molecule and having predominantly hydrocarbon character within the context of this invention. Such radicals include the following:

(1) Hydrocarbon radicals; that is, aliphatic, alicyclic, aromatic, aliphatic- and alicyclic-substituted aromatic, aromatic-substituted aliphatic and alicyclic radicals, and the like. Such radicals are known to those skilled in the art; examples are methyl, ethyl, propyl, butyl, decyl, cyclopentyl, cyclohexyl, phenyl, tolyl, xylyl, α-naphthyl, β-naphthyl and biphenylyl (all isomers being included).

(2) Substituted hydrocarbon radicals; that is, radicals containing non-hydrocarbon substituents which, in the context of this invention, do not alter the predominantly hydrocarbon character of the radical. Those skilled in the art will be aware of suitable substituents; examples are halo, alkoxy (especially lower alkoxy), carbalkoxy, nitro, cyano and alkyl sulfone.

(3) Hetero radicals; that is, radicals which, while predominantly hydrocarbon in character within the context of this invention, contain atoms other than carbon present in a chain or ring otherwise composed of carbon atoms. Suitable hetero atoms will be apparent to those skilled in the art and include, for example, nitrogen, oxygen, sulfur and silicon.

For the most part, not more than three substituents or hetero atoms will be present for each 10 carbon atoms in the hydrocarbon-based radical. An exception comprises molecules in which silicon is a hetero atom, which may, for example, contain three hetero atoms for as few as 4 carbon atoms.

Reagent A according to this invention is at least one diamine having formula I. The $R^1$ value therein is most often an aromatic hydrocarbon radical containing about 6-20 carbon atoms or a halogenated derivative thereof, an alkylene or cycloalkylene radical containing about 2-20 carbon atoms or a bis-alkylenepoly-(dialkylsiloxane) radical. The aromatic hydrocarbon radicals are preferred.

Examples of suitable diamines of formula I are ethylenediamine, propylenediamine, trimethylenediamine, diethylenetriamine, triethylenetetramine, heptamethylenediamine, octamethylenediamine, 2,11-dodecanediamine, 1,12-octadecanediamine, 3-methylheptamethylenediamine, 4,4-dimethylheptamethylene-

diamine, 5-methylnonamethylenediamine, 2,5-dimethylhexamethylenediamine, 2,2-dimethylpropylenediamine, N-methyl-bis(3-aminopropyl)-amine, 3-methoxyhexamethylenediamine, 1,2-bis(3-aminopropoxy)ethane, bis(3-aminopropyl) sulfide, 1,4-cyclohexanediamine, bis-(4-aminocyclohexyl)methane, m-phenylenediamine, p-phenylenediamine, 2,4-diaminotoluene, 2,6-diaminotoluene, m-xylylenediamine, p-xylylenediamine, benzidine, 3,3'-dimethyl-benzidine, 3,3'-dimethoxybenzidine, 1,6-diaminonaphthalene, 4,4'-diaminodiphenylmethane, 4,4'-diaminodiphenylpropane, 2,4-bis-(β-amino-t-butyl)toluene, bis(p-β-methyl-o-aminopentyl)-benzene, 1,3-diamino-4-iospropylbenzene, 4,4-diaminodiphenyl sulfone, 4,4'-diaminodiphenyl ether and bis(3-aminopropyl) tetramethyldisiloxane. Mixtures of these diamines may also be used. Particularly preferred are the aromatic diamines, especially m-phenylenediamine and 4,4'-diaminodiphenylmethane; the $R^1$ radical is then either

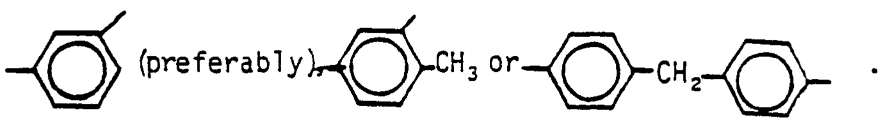
(preferably) or

In reagent B (the carboxy anhydride) as defined by formula II, $R^2$ is usually a trivalent aliphatic radical containing about 2-20 carbon atoms or, preferably, a trivalent aromatic radical containing about 6-20 carbon atoms. Illustrative carboxy anhydrides are trimellitic anhydride, 5-chlorotrimellitic anhydride, benzene-1,2,3-tricarboxylic acid anhydride and carboxysuccinic anhydride. The preferred carboxy anhydrides are those in which $R^2$ is an aromatic and especially an aromatic hydrocarbon radical. Trimellitic anhydride is most preferred.

In reagent C (the dianhydride) as defined by formula III, $R^3$ is a tetravalent radical which is typically analogous to those previously described with reference to $R^1$ and $R^2$. A number of suitable dianhydrides are disclosed in columns 5-6 of U.S. Patent 4,061,622 and in U.S. Patent 4,331,799. The disclosures of both of said patents are incorporated by reference herein.

A particularly preferred group of dianhydrides of formula III comprises those in which $R^3$ is

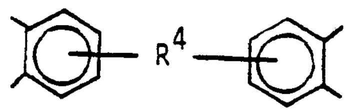

,

wherein $R^4$ is oxygen, sulfur, $-SO_2-$, lower alkylene (the word "lower" as used herein denoting up to 7 carbon atoms) or, most desirably, $-O-R^5-O-$ and $R^5$ is a divalent aromatic hydrocarbon-based radical. $R^5$ is most often a divalent radical derived from benzene or a substituted benzene, biphenyl or a substituted biphenyl, or a diphenylalkane which may contain substituents on one or both aromatic radicals. The following radicals are preferred as $R^5$:

(VII)

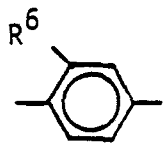

(VIII)

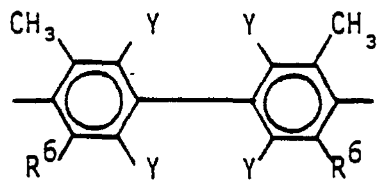

(IX)

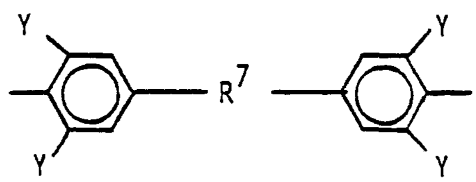

wherein each $R^6$ is independently hydrogen or methyl, $R^7$ is a straight-chain or branched alkylene radical containing 1-5 carbon atoms and is most often the isopropyidene radical, and each Y is independently hydrogen or halogen (usually chlorine or bromine). Mixtures of the foregoing formulas are also contemplated. Most preferred is the radical derived from bisphenol A [i.e., 2,2'-bis(4-hydroxyphenyl)propane] by the removal of both hydroxy groups therefrom, and having formula IX wherein $R^7$ is isopropylidene and each Y is hydrogen. Thus, the most preferred dianhydride for use as reagent C is 2,2-bis[4-(3,4-dicarboxyphenoxy)phenyl]-propane dianhydride, hereinafter referred to as "bisphenol A dianhydride".

Step 1 in the method of this invention is ordinarily effected by merely blending reagents A, B and C and heating to a temperature at which said reaction takes place. The reaction with the two anhydrides may be simultaneous (i.e., reagents B and C used together) or sequential (i.e., reagent C added first, followed by reagent B); however, simultaneous reaction is usually preferred since no particular advantage results from sequential addition.

The reaction temperature is typically within the range of about 100-200°C, and at least partially above about 160°C to insure removal of all water of reaction and complete imidization of any amic acids formed. It is usually advantageous to carry out the reaction in a substantially inert organic diluent. Typical diluents are such aprotic solvents as benzene, toluene, xylene, o-dichlorobenzene, dimethylformamide, dimethylacetamide, dimethyl sulfoxide or N-methylpyrrolidone.

A factor in step 1 is the difference in reactivity with reagent A of intramolecular anhydride and carboxylic acid moieties. The reaction of a diamine with intramolecular anhydride moieties is strongly favored over that with carboxylic acid moieties. This selectivity insures production of a carboxy-terminated prepolymer.

It is frequently preferred to include in the reaction mixture a catalytic amount of at least one tertiary amine, which may be aliphatic, alicyclic or heterocyclic. Suitable amines include triethylamine, N-methylpiperidine and 4-dimethylaminopyridine. The required amount of tertiary amine is small, typically about 0.05-0.5% by weight based on the total of reagents A, B and C.

The molecular weight of the prepolymer intermediate produced in step 1 will depend to a large extent on the molecular ratio of reagent C

to reagent B in the reaction mixture, with higher molecular weight prepolymers being obtained as the proportion of reagent C is increased. Molar ratios of at least about 0.25:1 are within the scope of the invention. A ratio of at least 0.5:1 is preferred, since lower ratios will produce a prepolymer in which some molecular species contain moieties derived from reagents A and B only. There does not appear to be any upper limit to this molar ratio, although a higher value than about 5:1 usually affords no particular advantage.

The proportion of reagent A in the reaction mixture is determined so as to produce a carboxy-terminated prepolymer. This is effected by using a ratio of equivalents of reagent A to anhydride equivalents of reagents B and C combined of about 1:1, typically about 0.95-1.05:1. The term "anhydride equivalent" as used herein is based on the number of anhydride groups theoretically present per molecule, with free carboxylic acid groups being disregarded; thus, one mole of reagents B and C is one and two anhydride equivalents, respectively. One mole of reagent A is two equivalents thereof, since two amino groups are present per molecule. Under these conditions, only the anhydride groups react with reagent A and the free carboxy groups become the terminal groups in the prepolymer.

Structural evidence indicates that the prepolymer intermediates produced in step 1 have the formula

(IX) 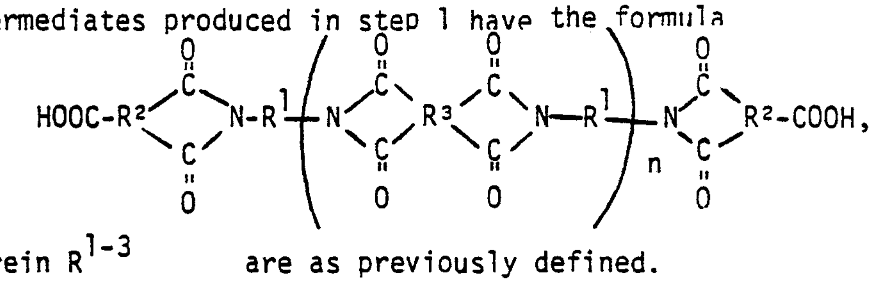

wherein $R^{1-3}$ are as previously defined.

In formula IX, the value of n will theoretically be twice the molar ratio of component C to component B. As said molar ratio varies from 0.25:1 to 5:1, therefore, the average value of n will vary from 0.5 to 10 and is preferably at least 1.

The preparation of prepolymers by step 1 of the method of this invention is illustrated by the following examples. All parts are by weight.

EXAMPLES 1-6

A mixture of 19.2 grams (0.1 mole) of trimellitic anhydride (reagent B), bisphenol A dianhydride (reagent C), a stoichiometric amount of m-phenylenediamine (MPD) or 4,4'-diamino-diphenylmethane (MDA) (reagent A) with respect to anhydride equivalents of reagents B and C, 0.01 part of 4-dimethylaminopyridine, 30 parts of N-methylpyrrolidone and 47 parts of toluene was slowly heated to 130°C, during which time the mixture became homogeneous and a toluene-water azeotrope began to distill. Heating was continued to approximately 180°C as water was removed by distillation. The residue was a solution of the desired prepolymer.

The reagents, proportions and other pertinent data for Examples 1-6 are given in Table I.

TABLE I

| Example | Amine | Mole ratio, C:B |
|---|---|---|
| 1 | MPD | 0.5 |
| 2 | MPD | 0.25 |
| 3 | MPD | 1.0 |
| 4 | MDA | 0.5 |
| 5 | MDA | 1.0 |
| 6 | MDA | 1.5 |

For the formation of the acid-extended polyamideimides of the invention (step 2), a mixture of the product of step 1 or a functional derivative thereof (reagent D) and reagent F (described hereinafter) is reacted with reagent E which may be a diisocyanate or a diamine. If reagent D is the prepolymer itself, the reaction forming the polyamideimide proceeds most effectively when reagent E is a diisocyanate, and involves the condensation of one carboxylic acid moiety with one isocyanate moiety to form an amide linkage with the elimination of one mole of carbon dioxide. A corresponding carboxylic acid-amine reaction is somewhat slow and difficult, so if reagent E is a diamine it is preferred to use as reagent D a functional derivative of the prepolymer such as an acyl halide thereof. For electrical

uses of the polyamideimides, however, where the presence of halide ions may be detrimental, and also for the sake of simplicity of production, the reaction between the prepolymer and the diisocyanate is preferred. Frequent reference hereinafter will be made to diisocyanates as reagent E, but it should be understood that diamines may be substituted therefor under appropriate conditions.

The diisocyanates and diamines suitable for use as reagent E have formulas V and VI, respectively. In these formulas, $R^4$ may be a divalent hydrocarbon radical similar to $R^1$ in formula I. It may be the same as $R^1$ or different. When reagent D is a diamine, each of $R^5$ and $R^6$ may be hydrogen or a lower hydrocarbon-based radical, preferably a hydrocarbon radical and still more preferably a lower alkyl (especially methyl). When $R^5$ or $R^6$ is other than hydrogen, the reaction thereof with the acid moiety in the prepolymer will form an N-substituted amide linkage. Such linkages are, of course, not formed when reagent E is a diisocyanate.

Illustrative diamines suitable for use as reagent E include those recited hereinabove with reference to reagent A, as well as, for example, the corresponding N,N'-dimethyl compounds. Illustrative diisocyanates are p-phenylene diisocyanate, 2,4-toluene diisocyanate, 2,6-toluene diisocyanate, xylene diisocyanates, mesitylene diisocyanate, durene diisocyanate, 4-methoxy-1,3-phenylene diisocyanate, 4-chloro-1,3-phenylene diisocyanate, 4-isopropyl-1,3-phenylene diisocyanate, the tolidine diisocyanates, dianisidine diisocyanate, 4,4'-methylenebis(phenyl isocyanate), 4,4'-methylenebis(o-tolyl isocyanate), 4,4'-methylenebis(cyclohexylisocyanate), 1,5-naphthalene diisocyanate, 4,4'-bis(isocyanatophenyl) ether, 2,4'-bis(isocyanatophenyl) ether, and 4,4'-bis(isocyanatophenyl) sulfone. Mixtures of the foregoing isocyanates are also contemplated. The preferred diisocyanates, from the standpoint of availability, low cost and particular suitability for preparing the polyamideimides of this invention, are 2,4-toluene diisocyanate (2,4-TDI), 2,6-toluene diisocyanate (2,6-TDI), and 4,4'-methylenebis(phenyl isocyanate) (MDI).

Reagent E may also be an isocyanate- or amine-terminated polymer, such as a polyamide or polyurethane. In that case, $R^4$ is a polymeric radical and the product is a block copolymer with polyimide and polyamide, polyurethane or similar blocks connected by amide linkages.

As previously mentioned, step 2 of the method of this invention is the reaction of a mixture of reagents D and F with reagent E. Reagent F is at least one dicarboxylic acid having formula IV, or a functional derivative thereof; whether the free acid or a derivative thereof is used will depend on the structure of reagent D, the same functional groups being present in reagents D and F. The $R^7$ value in formula IV is a divalent hydrocarbon-based radical containing about 3-12 carbon atoms such as trimethylene, tetramethylene, hexamethylene, decamethylene, m-phenylene, p-phenylene, p-tolylene, p-chlorophenylene or 1,4-naphthylene. Alkylene radicals containing 3-6 carbon atoms and aromatic hydrocarbon radicals, especially the latter, are preferred. Most preferably, $R^7$ is at least one of the m- and p-phenylene radicals.

In step 2, a mixture of reagents D, E and F is normally heated to a temperature within the range of about 150-225°C until carbon dioxide evolution is complete. The reaction may be effected in a substantially inert organic diluent such as those previously listed with reference to prepolymer formation.

In general, molar ratios of reagent F to reagent D may be as high as 2:1 but are preferably up to about 1.5:1. There is no real lower limit for said ratio, but a value less than about 0.1:1 rarely offers any advantage. The most preferred values are from about 0.4:1 to about 1.25:1.

The ratio of equivalents of reagents D and F combined to reagent E (the equivalent weight of each being half its molecular weight) may be varied in accordance with the polymer molecular weight desired. In general, ratios between about 0.5:1 and about

2:1 are contemplated, these being the minimum and maximum values which will produce a product containing at least two prepolymer-, acid- or diisocyanate-derived units. Ratios from about 0.67:1 to about 1.5:1 are preferred since products of higher molecular weight are then obtained. The most preferred ratio is about 1:1. Because the reaction between reagents D, E and F normally does not proceed to completion, it is frequently advisable to analyze the reaction mixture for free acid groups after the initial reaction with reagent E, and subsequently to add an additional increment thereof effective to reduce the residual acid content to less than about 1%. Most often, no more than about 10% by weight of the original amount of reagent E is required for this purpose. Thus, a ratio of equivalents of reagents D and F combined to reagent E between about 0.9:1 and about 1:1 is especially preferred. It is also contemplated to incorporate in the reaction mixture minor amounts of chain-stopping or endcapping reagents, typically monoisocyanates such as phenyl isocyanate, monoamines such as aniline, monocarboxylic acids such as benzoic acid or monoanhydrides such as phthalic anhydride.

It is believed that the copolyamideimides of this invention consist essentially of units having the formula

(X)

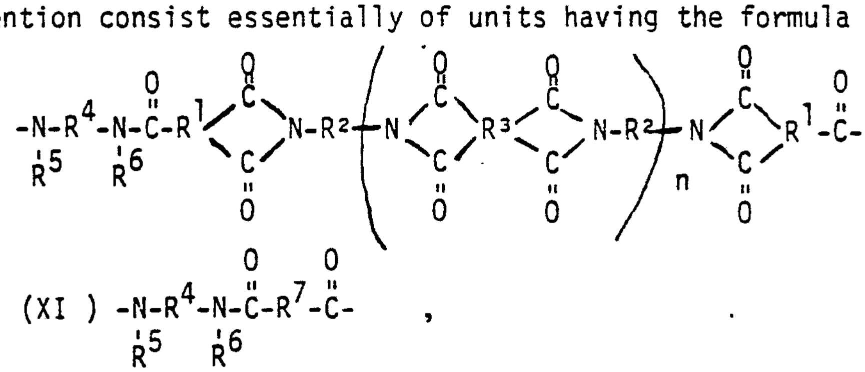

and

(XI) ,

wherein $R^{1-7}$ and n are as previously defined, the ratio of units of formula XI to those of formula X being approximately the same as the molar ratio of reagent F to reagent D. Because of some uncertainty regarding this structure, however, they are also appropriately defined in terms of the method for their preparation.

The copolyamideimides of this invention normally have weight average molecular weights from about 30,000 to about 150,000. The intrinsic viscosities thereof, determined in dimethylformamide at 25°C, are in the range of about 0.2-0.9 dl./g.

The preparation of acid-extended copolyamideimides by step 2 of the method of this invention is illustrated by the following examples.

EXAMPLES 7-9

To 0.1 equivalent of the prepolymer of Example 1 was added a measured amount of dicarboxylic acid. After all toluene was removed by distillation, the temperature of the mixture was raised to 150-190°C and a solution of an equivalent amount of 2,4-toluene diisocyanate in 50 ml. of o-dichlorobenzene was added over 1 hour. After carbon dioxide evolution was complete, the mixture was titrated to determine the presence of free acid and the additional amount of diisocyanate calculated to neutraloze the free acid was added. The solution was cooled, dissolved in dimethylformamide and precipitated by pouring into methanol. The copolyamideimide was removed by filtration and dried in a vacuum oven.

The compositional details and properties of the products of Examples 7-9 are given in Table II. Intrinsic viscosities were determined in dimethylformamide at 25°C.

TABLE II

| Example | 7 | 8 | 9 |
|---|---|---|---|
| Reagent F acid | Adipic | Isophthalic | Isophthalic |
| Molar ratio, F:D | 1:1 | 1:1 | 0.5:1 |
| Intrinsic viscosity, dl./g. | 0.28 | 0.31 | 0.24 |
| Tg, °C | 228 | 254 | 255 |

The acid-extended copolyamideimides of this invention may be converted into films for wrapping and packaging applications and into molding compounds. They are also useful for application in solution to electrical conductors made of copper, aluminum or the like, particularly wires, as insulating coatings. If desired, additional overcoats of polyamides, polyesters, silicones,

polyvinylformals, epoxy resins, polyimides, polytetrafluoroethylene or the like may be further applied to such insulated conductors.

What is claimed is:

1. A method for preparing an acid-extended copolyamide polymer whichcomprises the steps of:

(1) reacting, under conditions whereby all water of reaction is removed:

(A) at least one diamine having the formula

$$\text{(I)}\quad H_2N\text{-}R^1\text{-}NH_2 \quad ,$$

wherein $R^1$ is a divalent hydrocarbon-based radical, with

(B) at least one carboxy anhydride of the formula

(II ) 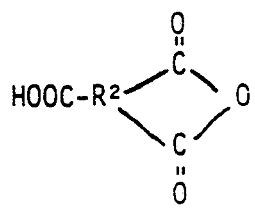 ,

wherein $R^2$ is a trivalent hydrocarbon-based radical, and

(C) at least one dianhydride of the formula

(III) 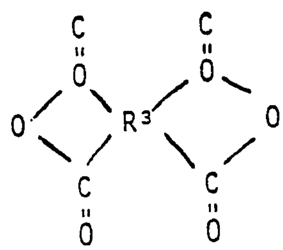 ,

wherein $R^3$ is a tetravalent hydrocarbon-based radical;

the molar ratio of reagent C to reagent B being at least about 0.25:1 and the ratio of equivalents of reagent A to anhydride equivalents of reagents B and C combined being about 1:1; and subsequently

(2) reacting a mixture of

(D) the product of step 1, or a functional derivative thereof, and

(F) at least one dicarboxylic acid having the formula

$$\text{(IV)}\quad HOOC\text{-}R^7\text{-}COOH,$$

wherein $R^7$ is a divalent hydrocarbon-based radical containing about 3-12 carbon atoms or a functional derivative thereof, with

(E) at least one of diisocyanates having the formula

(V) $OCN-R^4-NCO$

and diamines having the formula

(VI) $R^5NH-R^4-NHR^6$,

wherein $R^4$ is a divalent hydrocarbon-based or polymeric radical and each of $R^5$ and $R^6$ is independently hydrogen or a lower hydrocarbon-based radical.

2. A method according to claim 1 wherein reagent D is said prepolymer, reagent E is at least one diisocyanate, and each of $R^1$ and $R^4$ is independently an aromatic hydrocarbon radical containing about 6-20 carbon atoms or a halogenated derivative thereof, an alkylene or cycloalkylene radical containing about 2-20 carbon atoms or a bis-alkylene poly(dialkylsiloxane) radical.

3. A method according to claim 2 wherein each of $R^2$ and $R^3$ is an aromatic radical containing about 6-20 carbon atoms and the ratio of equivalents of reagents D and F combined to reagent E is from about 0.67:1 to about 1.5:1.

4. A method according to claim 3 wherein $R^7$ is an alkylene radical containing 3-6 carbon atoms or an aromatic hydrocarbon radical.

5. A method according to claim 4 wherein the molar ratio of reagent C to reagent B is at least about 0.5:1 and the molar ratio of reagent F to reagent E is up to about 1.5:1.

6. A method according to claim 5 wherein each of $R^1$ and $R^4$ is an aromatic hydrocarbon radical, $R^2$ is

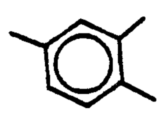 ,

and $R^3$ is

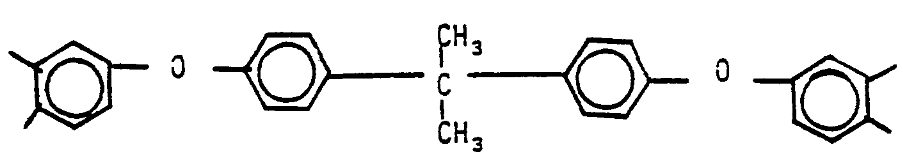 .

7. A method according to claim 6 wherein $R^7$ is at least one of the m- and p-phenylene radicals.

8. A method according to claim 7 wherein reagent A is m-phenylenediamine, m-toluenediamine or 4,4-diaminodiphenylmethane and reagent E is at least one of 2,4-toluene diisocyanate, 2,6-toluene diisocyanate and 4,4'-methylene bis(phenyl isocyanate).

9. An acid-extended copolyamideimide prepared by the method of claim 1.

10. An acid-extended copolyamideimide prepared by the method of claim 3.

11. An acid-extended copolyamideimide prepared by the method of claim 4.

12. An acid-extended copolyamideimide prepared by the method of claim 7.

13. An acid-extended copolyamideimide consisting essentially of units having the formulas

(X ) 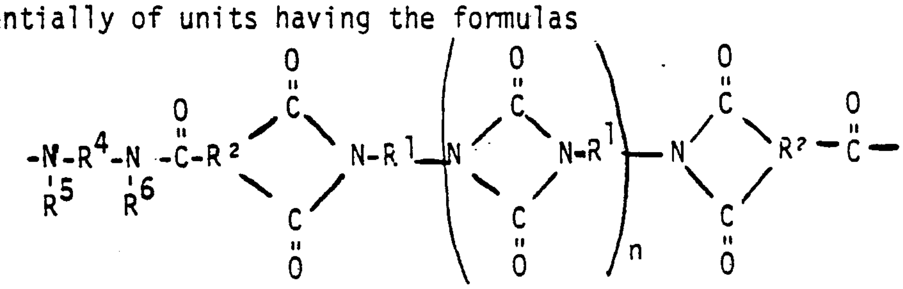 and

(XI ) 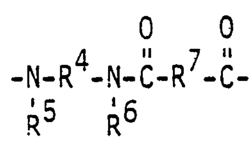,

wherein each of $R^1$ and $R^4$ is independently a divalent hydrocarbon-based radical, $R^2$ is a trivalent hydrocarbon-based radical, $R^3$ is a tetravalent hydrocarbon-based radical, each of $R^5$ and $R^6$ is independently hydrogen or a hydrocarbon-based radical, $R^7$ is a divalent hydrocarbon-based radical containing about 3-12 carbon atoms and the average value of n is at least 0.5; the ratio of units of formula XI to those of formula X being up to about 2:1.

14. A copolyamideimide according to claim 13 wherein each of $R^1$ and $R^4$ is independently an aromatic hydrocarbon radical containing about 6-20 carbon atoms or a halogenated derivative thereof, an alkylene or cycloalkylene radical containing

about 2-20 carbon atoms or a bis-alkylenepoly(dialkylsiloxane) radical.

15. A copolyamideimide according to claim 14 wherein each of $R^2$ and $R^3$ is an aromatic radical containing about 6-20 carbon atoms and each of $R^5$ and $R^6$ is hydrogen.

16. A copolyamideimide according to claim 15 wherein $R^7$ is an alkylene radical containing 3-6 carbon atoms or an aromatic hydrocarbon radical.

17. A copolyamideimide according to claim 16 wherein the average value of n is at least 1 and the ratio of units of formula XI to those of formula X is from about 0.67:1 to about 0.5:1.

18. A copolyamideimide according to claim 17 wherein each of $R^1$ and $R^4$ is an aromatic hydrocarbon radical, $R^2$ is

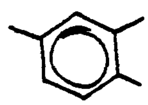 ,

$R^3$ is

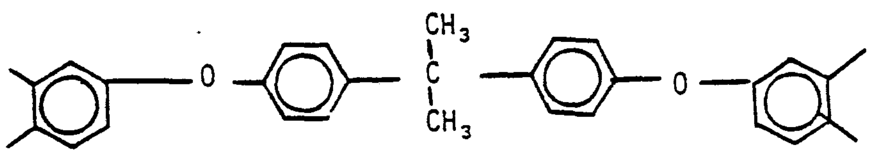

and the average value of n is at least 1.

19. A copolyamide according to claim 18 wherein $R^7$ is at least one of the m- and p-phenylene radicals.

20. A copolyamideimide according to claim 19 wherein $R^1$ is

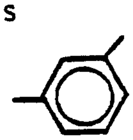 , 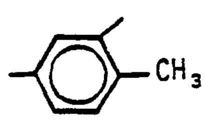 or 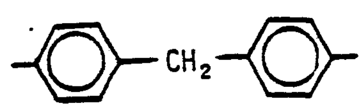

and $R^4$ is at least one of the 2,4-tolylene, 2,6-tolylene and 4,4'-methylenebis-phenyl radicals.

European Patent Office

# EUROPEAN SEARCH REPORT

0184592

Application number

EP 84 11 5326

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| A | FR-A-1 559 357 (D. BECK)<br>--- | | C 08 G 73/14<br>C 08 G 18/64<br>H 01 B 3/30 |
| D,A | US-A-3 929 691 (ALLARD)<br>--- | | |
| A | US-A-4 042 750 (R.B. HANSON)<br>--- | | |
| D,A | US-A-3 843 587 (J.T. KEATING et al.)<br>----- | | |
| | | | TECHNICAL FIELDS SEARCHED (Int. Cl.4) |
| | | | C 08 G |

The present search report has been drawn up for all claims

| Place of search | Date of completion of the search | Examiner |
|---|---|---|
| THE HAGUE | 12-07-1985 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82